# EUROPÄISCHE PATENTSCHRIFT

(11) **EP 3 515 816 B1**
(45) Veröffentlichungstag und Bekanntmachung des Hinweises auf die Patenterteilung: **05.01.2022**
(21) Anmeldenummer: 17772015.8
(22) Anmeldetag: 15.09.2017
(51) Int. Cl.: B64C 13/50, B64C 13/38, G05D 1/08

(54) **STEUERUNG UND REGELUNG VON AKTOREN, DIE AERODYNAMISCHE STEUERFLÄCHEN EINES LUFTFAHRZEUGS ANTREIBEN**
OPEN AND CLOSED CONTROL OF ACTUATORS WHICH DRIVE AERODYNAMIC CONTROL SURFACES OF AN AIRCRAFT
COMMANDE ET RÉGULATION D'ACTIONNEURS QUI ENTRAÎNENT DES GOUVERNES AÉRODYNAMIQUES D'UN AÉRONEF

(30) Priorität: 19.09.2016 DE 102016117634
(43) Veröffentlichungstag der Anmeldung: 31.07.2019
(73) Patentinhaber: Deutsches Zentrum für Luft- und Raumfahrt e.V., 51147 Köln (DE)
(72) Erfinder: VAN DER LINDEN, Franciscus, 81375 München (DE)
(74) Vertreter: Rösler Rasch van der Heide & Partner
(86) Internationale Anmeldenummer: PCT/EP2017/073365
(87) Internationale Veröffentlichungsnummer: WO 2018/050868

(56) Entgegenhaltungen:
- DE-A1-102011 115 356
- US-A- 5 593 109
- US-A1- 2011 108 671
- US-A1- 2011 118 906
- US-A1- 2014 163 783
- US-A1- 2016 096 616

## Beschreibung

Die Erfindung betrifft eine Vorrichtung und ein Verfahren zur Steuerung und Regelung von Aktoren, die aerodynamische Steuerflächen eines Luftfahrzeugs antreiben. Die Erfindung betrifft weiterhin ein Luftfahrzeug mit einer ebensolchen Vorrichtung.

Aktoren, die aerodynamische Steuerflächen (beispielsweise Querruder, Seitenruder, Höhenruder, Spoiler, Bremsklappen, Vor-Flügel, etc.) eines Luftfahrzeugs antreiben, sind im Stand der Technik positionsgeregelt. So werden den Aktoren typischerweise als Führungsgrößen Positionen oder Winkel und gegebenenfalls deren Zeitableitungen vorgegeben und von einem entsprechenden Regler basierend auf aktuell erfassten entsprechenden Regelgrößen geregelt.

Die Positionsregelung ist dabei typischerweise steif ausgeführt, was zu hohen Lasten auf die Steuerflächen und damit auf die Aktoren bei einer zusätzlichen Einwirkung von Böen auf die Steuerflächen führt. Zur Vermeidung von Instabilitäten werden positionsgeregelte Aktoren aufgrund der Reibung in den Aktoren typischerweise konservativ ausgelegt. Nichtlineare Aktoren oder hoch nichtlineare Aktoren eignen sich nicht optimal für eine Positionsregelung.

Aus der DE 10 2011 115 359 A1 geht ein elektronisches Gerät zur Positionierung eines Aktuators hervor, wobei das elektronische Gerät an dem Aktuator direkt oder indirekt anbringbar und/oder zumindest teilweise im Aktuator integrierbar ist, wobei das elektronische Gerät geeignet ist, von einem Flugsteuerungscomputer Befehle zum Kontrollieren und/oder Abschalten des Aktuators zu erhalten.

Aus der DE 10 2011 115 356 A1 geht ein Flugsteuerungssystem zur elektronischen Ansteuerung von Stellantrieben der Flugsteuerung eines Flugzeugs hervor, wobei Signalübertragungen zwischen Flugsteuerungsgeräten über einen Datenbus erfolgen, so das ein verteiltes bus-orientiertes elektronisches Flugsteuerungssystem realisierbar ist.

Aus der EP 2 772 816 A1 geht ein Verfahren zur Überwachung eines Luftfahrzeugs hervor. Das Verfahren umfasst ein Erfassen eines Eingabesignals einer Piloteneingabeschnittstelle, ein Ermitteln einer Antwort eines Steuer- und Regelsystems der aerodynamischen Steuerflächen des Luftfahrzeugs basierend auf einem Modell und den Eingaben des Piloten, sowie Ausgeben einer Warnung dann, wenn das Steuer-und Regelsystem einen Grenzwert erreicht.

Aus der WO 2007/084679 A2 geht eine Backup-Steuerung für ein verteiltes Flugsteuer- und Regelungssystem eines Flugzeugs hervor.

Aus der US 8,275,496 B2 geht ein Verfahren zur Reduzierung der vertikalen Positionsfehler eines Luftfahrzeugs hervor. Dabei wird eine auf Luftfahrzeug wirkende vertikale Störung ermittelt und geprüft, ob die Störung gegebene Grenzwerte übersteigt. Ist ein Grenzwertüberschritten, wird ein Auftriebssignal ermittelt und damit eine Position einer Steuerfläche kommandiert.

Aus der US 7,424,989 B2 geht ein Verfahren zur Schwingungsdämpfung eines Tragflügels hervor, bei dem der Aktuator einer Steuerfläche des Tragflügels mit einem zur Schwingung gegenphasigen Steuersignal angesteuert wird.

Aus der US 5 593 109 A geht ein Verfahren zur Ansteuerung einer Aeronautischen Fläche hervor.

Aus der US 2016/0096616 A1 geht eine Vorrichtung sowie ein Verfahren zum Betrieb eines Flugsteuerungssystems hervor, bei dem eine Lastkompensation erfolgt.

Aus der US 2014/163783 A1 geht ein Verfahren zur Drehmomentsteuerung eines Aktors eines Flugsteuerungssystems hervor.

Die Aufgabe der Erfindung ist es, eine Vorrichtung und ein Verfahren zur effektiveren und schnelleren Steuerung und Regelung von Aktoren anzugeben, die aerodynamische Steuerflächen eines Flugzeugs antreiben.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Ein erster Aspekt der Erfindung betrifft eine Vorrichtung zur Steuerung und Regelung von einer Anzahl n Aktoren Aₙ, n = 1, 2, ..., N, mit N ≥ 1, die aerodynamische Steuerflächen eines Luftfahrzeugs antreiben.

Der Begriff "Luftfahrzeug" umfasst vorliegend alle Fluggeräte, die schwerer und auch leichter als Luft sind, insbesondere Flächenflugzeuge, Hubschrauber, Luftschiffe, Multikopter und Drohnen. Die Luftfahrzeuge können für eine Steuerung durch einen Menschen eingerichtet sein und/oder eine automatische Flugsteuerungsvorrichtung aufweisen, die einen automatischen/autonomen Betrieb des Luftfahrzeugs ermöglicht.

Die "Aktoren" können insbesondere sein: Hydraulikaktoren, elektromechanisch angetriebene Aktoren (beispielsweise umfassend einen Elektromotor mit und ohne Getriebe). Die Aktoren sind typischerweise über eine Mechanik (Triebstrang) mit den zugeordneten Steuerflächen verbunden, sodass diese von den Aktoren bewegbar sind. Aus Redundanzgründen treiben vorteilhaft zumindest zwei Aktoren eine Steuerfläche an.

Der Begriff "Steuerflächen" umfasst vorliegend alle mittels Aktoren anlenkbare und verstellbare Steuerflächen, durch die eine gezielte Bewegung des Luftfahrzeugs im Fluge induziert werden kann, insbesondere: Querruder, Seitenruder, Höhenruder, Spoiler, Rotorblätter, Propellerblätter, Bremsklappen, Slats etc.

Die vorgeschlagene Vorrichtung umfasst erfindungsgemäß eine erste Schnittstelle, an der durch manuelle Eingabe eines Piloten in ein Eingabemittel Vorgaben SV_{Pilot} zur Steuerung der Aktoren Aₙ erzeugt und bereitgestellt werden und/oder eine zweite Schnittstelle, an der durch eine automatische Flugsteuerung des Luftfahrzeugs Vorgaben SV_{AutoPilot} zur Steuerung der Aktoren Aₙ erzeugt und bereitgestellt werden.

Vorteilhaft umfasst das Eingabemittel Seitenruderpedale zur Vorgabe einer Stellung eines Seitenruders des Luftfahrzeugs sowie ein Mittel zur Eingabe einer Vorgabe von Stellungen eines Querruders und/oder eines Höhenruders. Dieses letztgenannte Mittel kann insbesondere als sogenannter "Sidestick" oder als "Steuerhorn" oder als "Steuerknüppel" ausgeführt sein.

Die automatische Flugsteuerung ist vorteilhaft ein Autopilotensystem, das zur autonomen Flugführung ausgeführt und eingerichtet ist. Die Vorgaben: SV_{Pilot} sowie SV_{AutoPilot} sind vorteilhaft jeweils Vektoren, deren Vektorelemente Vorgaben (Steuerungsinformationen) für einen einzelnen Aktor Aₙ und/oder eine Gruppe von Aktoren Aₙ bereitstellen. In bemannten Luftfahrzeugen sind vorteilhaft die erste und die zweite Schnittstelle vorhanden. In unbemannten Luftfahrzeugen (Drohnen) ist vorteilhaft nur die zweite Schnittstelle vorhanden.

Die vorgeschlagene Vorrichtung umfasst erfindungsgemäß weiterhin eine Einheit, die auf Basis der über die zuvor angeführten Schnittstellen bereitgestellte Vorgaben SV_{Pilot} und/oder SV_{AutoPilot} je Aktor Aₙ eine Führungsgröße F_{An,soll} und/oder deren Zeitableitung *Ḟ_{An,soll}* zur Steuerung des Aktors Aₙ ermittelt, wobei die Führungsgröße F_{An,soll} eine Soll-Kraft oder ein Soll-Moment angibt, und je Aktor Aₙ einen Kraft-/Momenten-Regler REGₙ zur Regelung des Aktors Aₙ basierend auf der zugeordneten Führungsgröße F_{An,soll} und/oder *Ḟ_{An,soll}* und einer/eines vom Aktor Aₙ erzeugten Kraft/Moments F_{An} und/oder deren Zeitableitung *Ḟ_{An}* als Regelgröße, die von einer Sensorvorrichtung S1ₙ ermittelt wird, die jeweils am oder im Aktor Aₙ oder im Triebstrang des jeweiligen Aktors Aₙ vorhanden ist.

Die Regelungsstrategie derartiger Aktoren wird somit vorliegend im Gegensatz zur im Stand der Technik benutzten Positionsregelung auf einen Kraft-/Momenten-geregelten Ansatz umgestellt. Dies hat insbesondere folgende Vorteile. Die Steuerflächen reagieren aufgrund der Kraftregelung "nachgiebig" bzw. "elastisch" auf extern auf die Steuerfläche aufgebrachte Böenlasten. Bei Auftreten externer Böen werden die auf die Aktoren, die Steuerflächen und die Struktur des Luftfahrzeugs wirkenden Lasten reduziert. Die Kraftregelung ermöglicht eine schnellere Regelung, da die Aktordynamik besser ausgenutzt werden kann, dies ist insbesondere interessant bei Einwirkung externer Böen sowie bei schnellen Flugmanövern. Natürlich müssen nicht alle Aktoren eines Luftfahrzeugs, die Steuerflächen antreiben, nach dem vorgeschlagenen Kraft-/Momentenbasierten Regelungskonzept geregelt werden, sodass eine oder mehrere Steuerflächen des Luftfahrzeugs auch von positionsgeregelten Aktoren angetrieben werden können.

Durch die vorgeschlagene Regelungsstrategie (Kraft-/Momenten basierte Regelung) wird auch die sogenannte "Force Fight"- Problematik umgangen. Ein solcher "Force-Fight" entsteht bei Steuerflächen, die durch zwei oder mehr positionsgeregelte Aktoren angetrieben sind, wenn sich für die jeweiligen Aktoren Regelgrößenabweichungen für die aktuelle Position ergeben, die für verschiedene Aktoren unterschiedlich sind.

Eine vorteilhafte Weiterbildung der vorgeschlagenen Vorrichtung zeichnet sich dadurch aus, dass die Kraft-/Momenten-Regler REGₙ jeweils einen Prozessor PRₙ aufweisen, der mit einer Prozessortaktrate PTₙ arbeitet und die Einheit einen Prozessor PR_{E} aufweist, der mit einer Prozessortaktrate PT_{E} arbeitet, wobei gilt: PTₙ > PT_{E}, insbesondere PTₙ > 2 _{*} PT_{E}. Dies ermöglicht insbesondere bei auftretenden, extern auf die Steuerflächen wirkenden Böen, eine entsprechend schnelle und daher effektive Regelung der betroffenen Aktoren.

Erfindungsgemäß zeichnet sich die vorgeschlagene Vorrichtung weiterhin dadurch aus, dass je Aktor Aₙ eine Sensorvorrichtung S2ₙ vorhanden ist, die eine aktuelle Position POS_{An} des Aktors Aₙ oder eine aktuelle Position der dem Aktor Aₙ zugeordneten Steuerfläche ermittelt und dem Kraft-/Momenten-Regler REGₙ bereitstellt. Der Begriff "aktuelle Position POS_{An}" umfasst vorliegend insbesondere Längspositionen und Winkelpositionen. Die Sensorvorrichtung S2ₙ weist vorteilhaft einen Positions- oder Winkelsensor auf, mittels dem eine aktuelle Position oder ein aktueller Winkel gemessen wird. Alternativ oder zusätzlich kann die Sensorvorrichtung S2ₙ ein Mittel zur Schätzung der aktuellen Position oder des aktuellen Winkels aufweisen, dass die Position bzw. den Winkel auf Basis anderer Messgrößen, beispielsweise eines elektrischen Stroms oder einer elektrischen Spannung, ermittelt/schätzt. Die aktuelle Position POS_{An} kann für den jeweiligen Aktor, für den zugeordneten Triebsstrang oder für die zugeordnete Steuerfläche ermittelt werden.

Erfindungsgemäß zeichnet sich die vorgeschlagene Vorrichtung weiterhin dadurch aus, dass die Kraft-/Momenten-Regler REGₙ die Aktoren Aₙ derart regeln, dass die Positionen POS_{An} auf ein durch vorgegebene Intervallgrenzen Min(POS_{An}), Max(POS_{An}) definiertes Intervall I1_{An} := [Min(POS_{An}), Max(POS_{An})] begrenzt werden, mit: Min(POS_{An}) ≤ POS_{An} ≤ Max(POS_{An}), wobei die vorgegebenen Intervalle I1_{An} jeweils in einem Intervall l2_{An} [Min_{mech}(POS_{An}), Max_{mech}(POS_{An})] liegen, dessen Intervallendwerte: Min_{mech}(POS_{An}), Max_{mech}(POS_{An}) jeweils Positionen angeben, an denen eine Bewegung des jeweiligen Aktuators Aₙ oder der jeweils zugeordneten Steuerfläche mechanisch begrenzt ist. Dies basiert auf dem Vorhandensein der zuvor beschriebenen Sensorvorrichtungen S2ₙ. Im Ergebnis werden durch diese Regelung "virtuelle Endanschläge bzw. Begrenzungen" für eine Bewegung des jeweiligen Aktors und damit der zugeordneten Steuerfläche definiert. Vorteilhaft ist die Intervalllänge des Intervalls I1_{An} kleiner als die Intervalllänge des Intervall l2_{An}. Weiterhin vorteilhaft ist das Intervall I1_{An} derart im Intervall I2_{An}, dass die Intervallgrenzen des Intervalls I1_{An} von den Intervallgrenzen des Intervalls l2_{An} beabstandet sind. Dadurch werden die Ausschläge der Aktoren bzw. der Stellflächen limitiert und gleichzeitig wird verhindert, dass die Aktoren bzw. Stellflächen in mechanische Begrenzungen fahren, was die Lebensdauer entsprechend erhöht.

Zur Umsetzung der vorgeschriebenen Regelung ist erfindungsgemäß über dem Intervall I1_{An} eine Funktion F(Pos_{An}) definiert, deren Betrag |F(Pos_{An})| nur im Bereich der Intervallgrenzen Min(POS_{An}), Max(POS_{An}) nicht vernachlässigbar ist, wobei die Funktion F(POS_{An}) derart gewählt ist, dass gilt: |F(Min(POS_{An}))| = |F_{An,soll}| und |F(Max(POS_{An}))| = |F_{An,soll}|, und wobei den Kraft-/Momenten-Reglern REGₙ eine Regelgröße F*_{An} rückgekoppelt wird, für die gilt: F^{*}_{An} = F_{An} - F(POS_{An}).

Vorteilhaft werden die Intervallgrenzen Min(POS_{An}), Max(POS_{An}) abhängig von einem bereitgestellten aktuellen dynamischen Zustand und/oder abhängig von einer aktuellen Konfiguration des Luftfahrzeugs und/oder von Parametern, die die umgebende Luft beschreiben vom jeweiligen Kraft-/Momenten-Regler REGₙ (106) gewählt. Der dynamische Zustand umfasst beispielsweise folgende Zustandsgrößen: Fluggeschwindigkeit, Flughöhe, Last-Vielfaches, Anstellwinkel, Gierwinkel, Rollwinkel, und deren zeitliche Änderungen, etc. Die aktuelle Konfiguration des Luftfahrzeugs beschreibt beispielsweise, ob das Fahrwerk ausgefahren oder eingefahren ist, welche Klappen wie gesetzt sind etc. Die Luftparameter geben beispielsweise die Lufttemperatur, den Luftdruck, die Luftfeuchte, die Luftdichte an. Die veränderbar vorgebbaren Intervallgrenzen und damit die veränderbar vorgegebenen virtuellen Begrenzungen beispielsweise von Ruderausschlägen oder ausfahrbaren Klappen dienen der Flugsicherheit, da sie die Ansteuerung von aerodynamischen Steuerflächen auf den dynamischen Zustand, die Konfiguration und die die umgebende Luft beschreibenden Parameter optimieren/begrenzen.

Eine fortlaufende Weiterbildung der vorgeschlagenen Vorrichtung zeichnet sich dadurch aus, dass zur Ansteuerung der Aktoren Aₙ ein Positionsregler vorhanden ist, wobei bei Erreichen der Intervallgrenzen Min(POS_{An}), Max(POS_{An}) von dem Kraft-/Momenten-Regler auf den Positionsregler umgeschaltet wird.

Eine vorteilhafte Weiterbildung der vorgeschlagenen Vorrichtung zeichnet sich dadurch aus, dass dem Kraft-/Momenten-Regler REGₙ eine Regelgröße F**_{An} rückgekoppelt wird, bei der für F**_{An} gilt: F**_{An} = F^{*}_{An} + F_{G}, wobei F_{G} eine konstante Trimmkraft zur Gravitationskompensation für an der jeweiligen Steuerfläche und/oder dem Triebstrang des jeweiligen Aktors Aₙ angreifende Gravitationskräfte ist oder wobei F_{G} eine Autotrimm-Funktion ist, die abhängig von der POS_{An} und/oder der Zeit t ist. Vorteilhaft gilt für F_{G}: d(F_{G})/dt = k _{*} F_{An,soll}, wobei k eine vorgegebene Konstante ist. Die Funktion F_{G} ist somit entweder eine Konstante zur Trimmung und/oder zum Ausgleich eine auf die jeweilige Stellfläche wirkenden Gravitationskraft oder ein Integrationsglied mit einer geringen Verstärkung. Diese Weiterbildungen ermöglichen die Kompensation von auf den Aktor wirkenden externen Kräften und die Speicherung bzw. Aufrechterhaltung der aktuellen Aktorpositionen POS_{An}, sodass bei Ausfall der Steuersignale (Führungsgrößen) ein getrimmtes Flugzeug weiterfliegt.

Eine vorteilhafte Weiterbildung der vorgeschlagenen Vorrichtung zeichnet sich dadurch aus, dass dem Kraft-/Momenten-Regler REGₙ eine Regelgröße F***_{An} rückgekoppelt wird, bei der gilt: F***_{An} = F^{*}_{An} + F_{D} oder F***_{An} = F^{*}_{An} + F_{G} + F_{D}, wobei für F_{D} gilt: F_{D} = d(POS_{An})/dt * D, wobei D eine virtuelle Dämpfung angibt.

Eine vorteilhafte Weiterbildung der vorgeschlagenen Vorrichtung zeichnet sich dadurch aus, dass dem Kraft-/Momenten-Regler REGₙ eine Regelgröße F****_{An} rückgekoppelt wird, für die gilt: F****_{An} = F*_{An} + F_{S} oder F****_{An} = F*_{An} + F_{G} + F_{S} oder F****_{An} = F*_{An} + F_{D} + F_{S} oder F****_{An} = F^{*}_{An} + F_{D} + F_{G} + F_{S}, wobei für F_{S} gilt: F_{S}=(POS_{An}-POS_{ref}) _{*} S, wobei S eine virtuelle Steifigkeit und POS_{ref} eine Neutralposition der jeweiligen Steuerfläche angibt, wobei die Neutralposition POS_{ref} dadurch definiert ist, dass durch die betreffende Steuerfläche kein eine Flugzeugbewegung induzierendes Moment erzeugt wird.

Die vorstehenden drei Weiterbildungen ermöglichen die Kompensation von auf den Aktor wirkenden externen Kräften und die Speicherung bzw. Aufrechterhaltung der aktuellen Aktorpositionen POS_{An}, sodass auch bei Ausfall der Steuersignale (Führungsgrößen) ein getrimmtes Flugzeug weiterfliegt.

Eine vorteilhafte Weiterbildung der vorgeschlagenen Vorrichtung zeichnet sich dadurch aus, dass Aktoren Aₙ Elektromotoren als Antriebseinheiten aufweisen. Vorteilhaft weisen die zugehörigen Sensorvorrichtungen S1ₙ Stromsensoren zur Messung des jeweiligen Betriebsstroms der Elektromotoren auf. Dies ermöglicht eine einfache Ermittlung bzw. Schätzung des aktuellen Aktormoments, da das Motormoment in einem direkten Zusammenhang mit dem Motorstrom steht. Eine Haftreibung, welche diese Schätzung möglicherweise verfälschen kann, kann beispielsweise mittels eines Knocker-Pulse-Verfahrens hochfrequent aufgebrochen werden, was zu einer erheblichen Verbesserung der Momentenschätzung auf Basis von Messungen des Motorstroms führt.

Eine vorteilhafte Weiterbildung der vorgeschlagenen Vorrichtung zeichnet sich dadurch aus, dass an der ersten Schnittstelle für mehrere der Aktoren Aₙ, deren zugeordnete Steuerflächen Momente um dieselbe Luftfahrzeug-Achse (Längsachse, Querachse, Hochachse) induzieren, eine für die Aktoren Aₙ gewichtete Regelgröße <F*_{An}> und/oder eine gewichtete Position <POS_{An}> bereitgestellt werden, um an dem Eingabemittel (110) ein Gesamt-Kraft-Feedback für die jeweilige Luftfahrzeug-Achse zu ermöglichen. Wird beispielsweise von einem Piloten an dem Steuerknüppel im Cockpit gezogen, so wird dadurch eine Bewegung des Luftfahrzeugs um die Querachse kommandiert. Um diese Bewegung auszuführen wird das Höhenruder bewegt. Typischerweise wird das Höhenruder von zwei oder mehr Aktoren angesteuert. Gemäß dieser Weiterbildung werden beispielsweise die Regelgrößen <F*_{An}> dieser Aktoren für das Gesamt-Kraft-Feedback gewichtet. Weiterhin können neben dem Höhenruder auch andere Stellflächen am Luftfahrzeug angesteuert werden, um eine solche Bewegung um die Querachse auszuführen. Gemäß dieser Weiterbildung gehen beispielsweise auch die Regelgrößen<F*_{An}> dieser Aktoren in die vorstehende Gewichtung ein.

Eine Weiterbildung der vorgeschlagenen Vorrichtung zeichnet sich dadurch aus, dass ein oder mehrere Kraft-/Momenten-Regler REGₙ eine Führungsgrößen-Vorsteuerung aufweisen, die auf Basis von: F_{An,soll} , F_{An} oder F*_{An}, und POS_{An} eine Reibung und/oder Dynamik im Aktor Aₙ und/oder eine Reibung und/oder Dynamik im dem jeweiligen Aktor Aₙ zugeordneten Triebstrang inklusive der zugeordneten Steuerfläche kompensiert. Insbesondere auf gegen die Luftströmung ausgeschlagene Steuerflächen wirken große Luftkräfte, die sich über den Triebstrang auf den Aktor übertragen. Die Führungsgrößen-Vorsteuerung ermöglicht insbesondere eine Verbesserung der Aktordynamik.

Ein zweiter Aspekt der vorliegenden Erfindung betrifft ein Luftfahrzeug mit einer Vorrichtung, wie sie vorstehend erläutert wurde. Vorteilhaft sind die Kraft-/Momenten-Regler REGₙ in dem Luftfahrzeug an den jeweils zugeordneten Aktoren Aₙ oder in einer unmittelbaren Umgebung zum jeweiligen Aktor Aₙ angeordnet. Dies ermöglicht kurze Signallaufzeiten zwischen den Sensoren und den Reglern und damit eine Verkürzung von Aktorreaktionszeiten. Vorteilhaft weist das Eingabemittel im Luftfahrzeug Seitenruderpedale und einen Sidestick oder einen Steuerknüppel oder ein Steuerhorn auf.

Vorteilhafte Weiterbildungen des Luftfahrzeugs ergeben sich durch eine analoge und sinngemäße Übertragung der vorstehend zu der erfindungsgemäßen Vorrichtung gemachten Ausführungen.

Ein dritter Aspekt der vorliegenden Erfindung betrifft ein Verfahren zur Steuerung und Regelung von n Aktoren Aₙ (101), n = 1, 2, ..., N, die aerodynamische Steuerflächen eines Luftfahrzeugs antreiben. Das vorgeschlagene Verfahren umfasst folgende Schritte. In einem ersten Schritt erfolgt ein Bereitstellen einer durch eine manuelle Eingabe eines Piloten in ein Eingabemittel erzeugten Vorgabe SV_{Pilot} zur Steuerung der Aktoren Aₙ. Alternativ oder zusätzlich erfolgt ein Bereitstellen einer durch eine automatische Flugsteuerung des Luftfahrzeugs erzeugten Vorgabe SV_{AutoPilot} zur Steuerung der Aktoren Aₙ. in einem zweiten Schritt erfolgt auf Basis der Vorgaben SV_{Pilot} und/oder SV_{AutoPilot} je Aktor Aₙ ein Ermitteln einer Führungsgröße F_{An,soll} zur Steuerung des Aktors Aₙ (101), wobei die Führungsgröße F_{An,soll} eine Soll-Kraft oder ein Soll-Moment angibt. Je Aktor Aₙ erfolgt nun durch einen Kraft-/Momenten-Regler REGₙ ein Regeln des Aktors Aₙ basierend auf der zugeordneten Führungsgröße F_{An,soll} und einer/eines vom Aktor Aₙ erzeugten Kraft/Moments F_{An} bzw. optional *Ḟ_{An}* als Regelgröße, die von einer Sensorvorrichtung S1ₙ ermittelt wird, der jeweils am oder im Aktor Aₙ oder im Triebstrang des jeweiligen Aktors Aₙ vorhanden ist.

Eine vorteilhafte Weiterbildung des vorgeschlagenen Verfahrens zeichnet sich dadurch aus, dass die Kraft-/Momenten-Regler REGₙ jeweils einen Prozessor PRₙ aufweisen, der mit einer Prozessortaktrate PTₙ arbeitet und die Einheit 105 einen Prozessor PR_{E} aufweist, der mit einer Prozessortaktrate PT_{E} arbeitet, wobei gilt: PTₙ > PT_{E}, insbesondere PTₙ > 2 _{*} PT_{E}.

Das erfindungsgemäße Verfahren zeichnet sich weiterhin dadurch aus, dass je Aktor Aₙ eine Sensorvorrichtung S2ₙ vorhanden ist, die eine aktuelle Position POS_{An} des Aktors Aₙ 101 oder eine aktuelle Position der dem Aktor Aₙ 101 zugeordneten Steuerfläche 102 erfasst und dem Kraft-/Momenten-Regler REGₙ 106 zuführt.

Das erfindungsgemäße Verfahren zeichnet sich weiterhin dadurch aus, dass die Kraft-/Momenten-Regler REGₙ die Aktoren Aₙ derart regeln, dass die Positionen POS_{An} auf ein durch vorgegebene Intervallgrenzen Min(POS_{An}), Max(POS_{An}) definiertes Intervall I1_{An} := [Min(POS_{An}), Max(POS_{An})] begrenzt werden, mit: Min(POS_{An}) ≤ POS_{An} ≤ Max(POS_{An}), wobei die vorgegebenen Intervalle I1_{An} jeweils in einem Intervall l2_{An} [Min_{mech}(POS_{An}), Max_{mech}(POS_{An})] liegen, dessen Intervallendwerte: Min_{mech}(POS_{An}), Max_{mech}(POS_{An}) jeweils Positionen angeben, an denen eine Bewegung des jeweiligen Aktuators Aₙ oder der jeweils zugeordneten Steuerfläche mechanisch begrenzt ist.

Eine vorteilhafte Weiterbildung des vorgeschlagenen Verfahrens zeichnet sich dadurch aus, dass die Intervalllänge des Intervalls I1_{An} kleiner als die Intervalllänge des Intervalls l2_{An} ist. Vorteilhaft liegt das Intervall I1_{An} mittig im Intervall l2_{An}.

Das erfindungsgemäße Verfahren zeichnet sich weiterhin dadurch aus, dass über dem Intervall I1_{An} eine Funktion F(Pos_{An}) definiert ist, deren Betrag |F(Pos_{An})| nur im Bereich der Intervallgrenzen Min(POS_{An}), Max(POS_{An}) nicht vernachlässigbar ist, wobei die Funktion F(POS_{An}) derart gewählt ist, dass gilt: |F(Min(POS_{An}))| = |F_{An,soll}| und |F(Max(POS_{An}))| = |F_{An,soll}|, und wobei dem Kraft-/Momenten-Regler REGₙ eine Regelgröße F^{*}_{An} rückgekoppelt wird, für die gilt: F^{*}_{An} = F_{An} - F(POS_{An}).

Eine vorteilhafte Weiterbildung des vorgeschlagenen Verfahrens zeichnet sich dadurch aus, dass die Intervallgrenzen Min(POS_{An}), Max(POS_{An}) abhängig von einem bereitgestellten aktuellen dynamischen Zustand und/oder abhängig von einer aktuellen Konfiguration des Luftfahrzeugs vom jeweiligen Kraft-/Momenten-Regler REGₙ gewählt werden.

Eine vorteilhafte Weiterbildung des vorgeschlagenen Verfahrens zeichnet sich dadurch aus, dass dem Kraft-/Momenten-Regler REGₙ eine Regelgröße F**_{An} rückgekoppelt wird, bei der für F**_{An} gilt: F**_{An} = F^{*}_{An} + F_{G}, wobei F_{G} eine konstante Trimmkraft zur Gravitationskompensation für an der jeweiligen Steuerfläche und/oder dem Triebstrang des jeweiligen Aktors Aₙ angreifende Gravitationskräfte ist oder wobei F_{G} eine Autotrimm-Funktion ist, die abhängig von der POS_{An} und/oder der Zeit t ist. Vorteilhaft gilt für F_{G}: d(F_{G})/dt = k _{*} F_{An,soll}, wobei k eine vorgegebene Konstante ist.

Eine vorteilhafte Weiterbildung des vorgeschlagenen Verfahrens zeichnet sich dadurch aus, dass dem Kraft-/Momenten-Regler REGₙ eine Regelgröße F***_{An} rückgekoppelt wird, bei der gilt: F***_{An} = F^{*}_{An} + F_{D} oder F***_{An} = F^{*}_{An} + F_{G} + F_{D}, wobei für F_{D} gilt: F_{D} = d(POS_{An})/dt _{*} D, wobei D eine virtuelle Dämpfung angibt.

Eine vorteilhafte Weiterbildung des vorgeschlagenen Verfahrens zeichnet sich dadurch aus, dass dem Kraft-/Momenten-Regler REGₙ eine Regelgröße F****_{An} rückgekoppelt wird, für die gilt: F****_{An} = F*_{An} + F_{S} oder F****_{An} = F*_{An} + F_{G} + F_{S} oder F****_{An} = F*_{An} + F_{G} + F_{S} oder F****_{An} = F*_{An} + F_{D} + F_{G} + F_{S}, wobei für F_{S} gilt: F_{S}=(POS_{An}-POS_{ref}) _{*} S, wobei S eine virtuelle Steifigkeit und POS_{ref} eine Neutralposition der jeweiligen Steuerfläche angibt, wobei die Neutralposition POS_{ref} dadurch definiert ist, dass durch die betreffende Steuerfläche kein eine Flugzeugbewegung induzierendes Moment erzeugt wird.

Eine vorteilhafte Weiterbildung des vorgeschlagenen Verfahrens zeichnet sich dadurch aus, dass an der ersten Schnittstelle für mehrere der Aktoren Aₙ, deren zugeordnete Steuerflächen Momente um dieselbe Luftfahrzeug-Achse (Längsachse, Querachse, Hochachse) induzieren, eine für die Aktoren Aₙ gewichtete Regelgröße <F*_{An}> und/oder eine gewichtete Position <POS_{An}> bereitgestellt werden, um an dem Eingabemittel ein Gesamt-Kraft-Feedback für die jeweilige Luftfahrzeug-Achse zu ermöglichen.

Eine vorteilhafte Weiterbildung des vorgeschlagenen Verfahrens zeichnet sich dadurch aus, dass ein oder mehrere Kraft-/Momenten-Regler REGₙ 106 eine Führungsgrößen-Vorsteuerung aufweisen, die auf Basis von F_{An,soll} , F_{An} oder F*_{An}, und POS_{An} eine Reibung und/oder Dynamik im Aktor Aₙ und/oder eine Reibung und/oder Dynamik im dem jeweiligen Aktor Aₙ zugeordneten Triebstrang inklusive der zugeordneter Steuerfläche kompensiert.

Weitere Vorteile des vorgeschlagenen Verfahrens ergeben sich durch eine analoge und sinngemäße Übertragung der vorstehend zu der erfindungsgemäßen Vorrichtung gemachten Ausführungen.

Ein weiterer Aspekt der vorliegenden Erfindung betrifft ein Computersystem mit einer Datenverarbeitungsvorrichtung, wobei die Datenverarbeitungsvorrichtung derart ausgestaltet ist, dass ein Verfahren, wie vorstehend beschrieben, auf der Datenverarbeitungsvorrichtung ausgeführt wird.

Ein weiterer Aspekt der Erfindung betrifft ein digitales Speichermedium mit elektronisch auslesbaren Steuersignalen, wobei die Steuersignale so mit einem programmierbaren Computersystem zusammenwirken können, dass ein Verfahren, wie vorstehend beschrieben, ausgeführt wird.

Ein weiterer Aspekt der vorliegenden Offenbarung betrifft ein Computer-Programm-Produkt mit auf einem maschinenlesbaren Träger gespeicherten Programmcode zur Durchführung des Verfahrens, wie vorstehend beschrieben, wenn der Programmcode auf einer Datenverarbeitungsvorrichtung ausgeführt wird.

Ein weiterer Aspekt der Erfindung betrifft ein Computer-Programm mit Programmcodes zur Durchführung des Verfahrens, wie vorstehend beschrieben, wenn das Programm auf einer Datenverarbeitungsvorrichtung abläuft. Dazu kann die Datenverarbeitungsvorrichtung als ein beliebiges aus dem Stand der Technik bekanntes Computersystem ausgestaltet sein.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1: eine schematisierte Darstellung des Aufbaus einer erfindungsgemäßen Vorrichtung, und
- Fig. 2: einen schematisierten Ablauf eines erfindungsgemäßen Verfahrens.

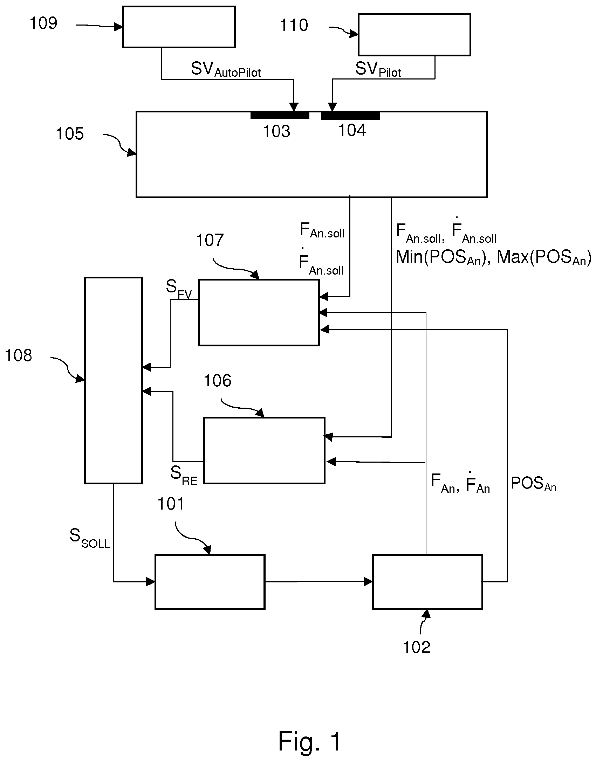

Fig. 1 zeigt eine schematisierte Darstellung zum Aufbau einer erfindungsgemäßen Vorrichtung zur Steuerung und Regelung eines von n Aktoren Aₙ 101, n = 1, 2, ..., N, mit N ≥ 1, die aerodynamische Steuerflächen 102 eines Luftfahrzeugs antreiben.

Die Vorrichtung umfasst eine erste Schnittstelle 104, an der durch manuelle Eingabe eines Piloten in ein Eingabemittel 110, vorliegend umfassend: Seitenruderpedale sowie ein Steuerhorn, Vorgaben SV_{Pilot} zur Steuerung der Aktoren Aₙ (vorliegend: Höhenruder, Querruder, Seitenruder) erzeugt und bereitgestellt werden. Weiterhin umfasst die Vorrichtung eine zweite Schnittstelle 103, an der durch eine automatische Flugsteuerung 109 (vorliegend einen Autopiloten des Luftfahrzeugs) Vorgaben SV_{AutoPilot} zur Steuerung der Aktoren Aₙ 101 erzeugt und bereitgestellt werden. Zur Vereinfachung ist in Fig. 1 nur einer der n Aktoren Aₙ 101 schematisch dargestellt.

Die erste Schnittstelle 104 sowie die zweite Schnittstelle 103 sind Bestandteile der Einheit 105. Die Einheit 105 ist dazu ausgeführt und eingerichtet auf Basis der Vorgaben SV_{Pilot} und/oder SV_{AutoPilot} je Aktor Aₙ 101 eine Führungsgröße F_{An,soll} zur Steuerung des Aktors Aₙ 101 zu ermitteln, wobei die Führungsgröße F_{An,soll} ein Soll-Moment angibt.

Die Vorrichtung umfasst weiterhin je Aktor Aₙ 101 einen Momenten-Regler REGₙ 106 zur Regelung des Aktors Aₙ 101 basierend auf der zugeordneten Führungsgröße F_{An,soll} sowie deren Zeitableitung *Ḟ_{An,soll}* und eines vom Aktor Aₙ 101 erzeugten Moments F_{An} sowie dessen Zeitableitung *Ḟ_{An}* als Regelgröße, die von einer Sensorvorrichtung S1ₙ (nicht dargestellt) ermittelt wird, die jeweils am oder im Aktor Aₙ oder im Triebstrang des jeweiligen Aktors Aₙ vorhanden ist.

Die dargestellte Vorrichtung umfasst weiterhin eine Führungsgrößen-Vorsteuerung 107, die auf Basis von: F_{An,soll}, *Ḟ_{An,soll}* , F_{An} und *Ḟ_{An}* eine Reibung im Aktor Aₙ 101 und eine Reibung in dem jeweiligen dem Aktor Aₙ 101 zugeordneten Triebstrang sowie eine aufgrund des Ausschlages der Steuerfläche gemäß F_{An,soll} zu erwartende Luftkraft auf die Steuerfläche 102 kompensiert. Die Ausgänge der Führungsgrößen-Vorsteuerung 107 und des Momenten-Reglers REGₙ 106 werden in einem Summierer 108 zusammengeführt und als Steuergröße dem Aktor 101 zugeführt. Der Aktor bewirkt daraufhin eine Bewegung der Steuerfläche 102. Die Führungsgrößen-Vorsteuerung 107 erzeugt als Ausgangssignal die Stellgröße S_{FV}. Der Momenten-Regler REGₙ 106 erzeugt als Ausgangssignal die Stellgröße S_{RE}. Der Summierer 108 ermittelt aus beiden Eingangsstellgrößen die Stellgröße S_{SOLL} = S_{FV} + S_{RE}.

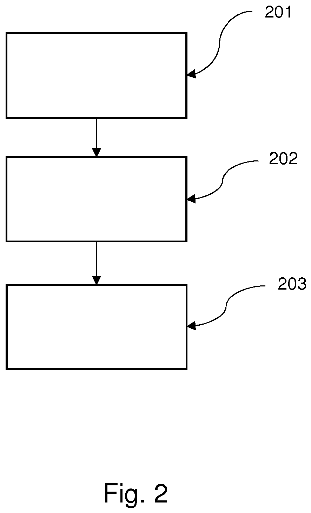

**Fig.** 2 zeigt einen schematisierten Ablauf eines erfindungsgemäßen Verfahrens zur Steuerung und Regelung von n Aktoren Aₙ 101, n = 1, 2, ..., N, mit N ≥ 1, die aerodynamische Steuerflächen 102 eines Luftfahrzeugs antreiben. Das Verfahren umfasst folgende Schritte. In einem ersten Schritt 201 erfolgt ein Bereitstellen einer durch eine manuelle Eingabe eines Piloten in ein Eingabemittel erzeugten Vorgabe SV_{Pilot} zur Steuerung der Aktoren Aₙ und/oder Bereitstellen einer durch eine automatische Flugsteuerung des Luftfahrzeugs erzeugten Vorgaben SV_{AutoPilot} zur Steuerung der Aktoren Aₙ. In einem zweiten Schritt 202 erfolgt auf Basis der Vorgaben SV_{Pilot} und/oder SV_{AutoPilot} je Aktor Aₙ 101 ein Ermitteln 202 einer Führungsgröße F_{An,soll} sowie deren Zeitableitung *Ḟ_{An,soll}* zur Steuerung des Aktors Aₙ 101, wobei die Führungsgröße F_{An,soll} eine Soll-Kraft oder ein Soll-Moment angibt.

In einem dritten Schritt 203 erfolgt je Aktor Aₙ 101 durch einen Kraft-/Momenten-Regler REGₙ 106 ein Regeln des Aktors Aₙ 101 basierend auf den zugeordneten Führungsgrößen F_{An,soll}, *Ḟ_{An,soll}* und einer/eines vom Aktor Aₙ erzeugten Kraft/Moments F_{An} als Regelgröße, die von einer Sensorvorrichtung S1ₙ ermittelt wird, die jeweils am oder im Aktor Aₙ oder im Triebstrang des jeweiligen Aktors Aₙ vorhanden ist.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche definiert wird.

### Bezugszeichenliste

- 101: Aktoren, Aktoren Aₙ
- 102: Steuerflächen
- 103: zweite Schnittstelle
- 104: erste Schnittstelle
- 105: Einheit
- 106: Kraft-/Momenten-Regler REGₙ
- 107: Führungsgrößen-Vorsteuerung
- 108: Summierer
- 109: automatische Flugsteuerung, Autopilot
- 110: Eingabemittel
- SV_{AutoPilot}: Steuerungsvorgabe des Autopiloten
- SV_{Pilot}: Steuerungsvorgabe des Piloten
- F_{An.soll}: Führungsgröße
- S_{FV}: Stellgröße der Führungsgrößen-Vorsteuerung
- S_{RE}: Stellgröße des Momentenreglers REGₙ
- S_{SOLL}: Stellgröße als Summe von S_{FV} + S_{RE}
- POS_{An}: Position des Aktors Aₙ
- Min(POS_{An}): Minimum der Position POS_{An}
- MAX(POS_{An}): Maximum der Position POS_{An}

- 201-203: Verfahrensschritte

## Patentansprüche

1. Vorrichtung zur Steuerung und Regelung von n Aktoren Aₙ (101), n = 1, 2, ..., N, mit N ≥ 1, die aerodynamische Steuerflächen (102) eines Luftfahrzeugs antreiben, umfassend:
- eine erste Schnittstelle (104), an der durch manuelle Eingabe eines Piloten in ein Eingabemittel (110) Vorgaben SV_{Pilot} zur Steuerung der Aktoren Aₙ (101) erzeugt und bereitgestellt werden und/oder eine zweite Schnittstelle (103), an der durch eine automatische Flugsteuerung des Luftfahrzeugs Vorgaben SV_{AutoPilot} zur Steuerung der Aktoren Aₙ (101) erzeugt und bereitgestellt werden,
- eine Einheit (105), die auf Basis der Vorgaben SV_{Pilot} und/oder SV_{AutoPilot} je Aktor Aₙ (101) eine Führungsgröße F_{An,soll} und/oder *Ḟ_{An,soll}* zur Steuerung des Aktors Aₙ (101) ermittelt, wobei die Führungsgröße F_{An,soll} eine Soll-Kraft oder ein Soll-Moment angibt,
- je Aktor Aₙ (101) einen Kraft-/Momenten-Regler REGₙ (106) zur Regelung des Aktors Aₙ (101) basierend auf der zugeordneten Führungsgröße F_{An,soll} und/oder *Ḟ_{An,soll}* und einer/eines vom Aktor Aₙ (101) erzeugten Kraft/Moments F_{An} als Regelgröße, die von einer Sensorvorrichtung S1ₙ ermittelt wird, die jeweils am oder im Aktor Aₙ (101) oder im Triebstrang des jeweiligen Aktors Aₙ (101) vorhanden ist, und
- je Aktor Aₙ (101) eine Sensorvorrichtung S2ₙ, die eine aktuelle Position POS_{An} des Aktors Aₙ (101) oder eine aktuelle Position der dem Aktor Aₙ (101) zugeordneten Steuerfläche (102) ermittelt und dem Kraft-/Momenten-Regler REGₙ (106) zuführt,
wobei
- die Kraft-/Momenten-Regler REGₙ (106) die Aktoren Aₙ (101) derart regeln, dass die Positionen POS_{An} auf ein durch vorgegebene Intervallgrenzen Min(POS_{An}), Max(POS_{An}) definiertes Intervall I1_{An} := [Min(POS_{An}), Max(POS_{An})] begrenzt werden, mit: Min(POS_{An}) ≤ POS_{An} ≤ Max(POS_{An}), wobei die vorgegebenen Intervalle I1_{An} jeweils in einem Intervall l2_{An} [Min_{mech}(POS_{An}), MaX_{mech}(POS_{An})] liegen, dessen Intervallendwerte: Min_{mech}(POS_{An}), Max_{mech}(POS_{An}) jeweils Positionen angeben, an denen eine Bewegung des jeweiligen Aktuators Aₙ (101) oder der jeweils zugeordneten Steuerfläche (102) mechanisch begrenzt ist, **dadurch gekennzeichnet, dass**
- über dem Intervall I1_{An} eine Funktion F(Pos_{An}) definiert ist, deren Betrag |F(Pos_{An})| nur im Bereich der Intervallgrenzen Min(POS_{An}), Max(POS_{An}) nicht vernachlässigbar ist, wobei die Funktion F(POS_{An}) derart gewählt ist, dass gilt: |F(Min(POS_{An}))| = |F_{An,soll}| und |F(Max(POS_{An}))| = |F_{An,soll}|, und dass dem Kraft-/Momenten-Regler REGₙ (106) eine Regelgröße F^{*}_{An} rückgekoppelt wird für die gilt: F*_{An} = F_{An} - F(POS_{An}).

2. Vorrichtung nach Anspruch 1,
bei der die Kraft-/Momenten-Regler REGₙ (106) jeweils einen Prozessor PRₙ aufweisen, der mit einer Prozessortaktrate PTₙ arbeitet und die Einheit (105) einen Prozessor PR_{E} aufweist, der mit einer Prozessortaktrate PT_{E} arbeitet, wobei gilt: PTₙ > PT_{E}, insbesondere PTₙ > 2 _{*} PT_{E}.

3. Vorrichtung nach Anspruch 1 oder 2,
bei der dem Kraft-/Momenten-Regler REGₙ (106) eine Regelgröße F**_{An} rückgekoppelt wird, bei der für F**_{An} gilt: F**_{An} = F^{*}_{An} + F_{G}, wobei F_{G} eine konstante Trimmkraft zur Gravitationskompensation für an der jeweiligen Steuerfläche (102) und/oder dem Triebstrang des jeweiligen Aktors Aₙ (101) angreifende Gravitationskräfte ist oder wobei F_{G} eine Autotrimm-Funktion ist, die abhängig von der POS_{An} und/oder der Zeit t ist.

4. Vorrichtung nach Anspruch 3,
bei der dem Kraft-/Momenten-Regler REGₙ (106) eine Regelgröße F***_{An} rückgekoppelt wird, bei der gilt: F***_{An} = F^{*}_{An} + F_{D} oder F***_{An} = F^{*}_{An} + F_{G} + F_{D}, wobei für F_{D} gilt: F_{D} = d(POS_{An})/dt * D, wobei D eine virtuelle Dämpfung angibt.

5. Vorrichtung nach Anspruch 4,
bei der dem Kraft-/Momenten-Regler REGₙ (106) eine Regelgröße F****_{An} rückgekoppelt wird, für die gilt: F****_{An} = F^{*}_{An} + F_{S} oder F****_{An} = F^{*}_{An} + F_{G} + F_{S} oder oder F****_{An} = F^{*}_{An} + F_{D} + F_{S} oder F****_{An} = F^{*}_{An} + F_{D} + F_{G} + F_{S}, wobei für F_{S} gilt: F_{S}=(POS_{An}-POS_{ref}) _{*} S, wobei S eine virtuelle Steifigkeit und POS_{ref} eine Neutralposition der jeweiligen Steuerfläche (102) angibt, wobei die Neutralposition POS_{ref} dadurch definiert ist, dass durch die betreffende Steuerfläche (102) kein eine Flugzeugbewegung induzierendes Moment erzeugt wird.

6. Luftfahrzeug mit einer Vorrichtung nach einem der Ansprüche 1 bis 5.

7. Verfahren zur Steuerung und Regelung von n Aktoren Aₙ (101), n = 1, 2, ..., N, mit N ≥ 1, die aerodynamische Steuerflächen (102) eines Luftfahrzeugs antreiben, mit folgenden Schritten:
- Bereitstellen (201) einer durch eine manuelle Eingabe eines Piloten in ein Eingabemittel (110) erzeugten Vorgabe SV_{Pilot} zur Steuerung der Aktoren Aₙ (101) und/oder Bereitstellen einer durch eine automatische Flugsteuerung (109) des Luftfahrzeugs erzeugten Vorgaben SV_{AutoPilot} zur Steuerung der Aktoren Aₙ (101),
- auf Basis der Vorgaben SV_{Pilot} und/oder SV_{AutoPilot} je Aktor Aₙ (101) Ermitteln (202) einer Führungsgröße und/oder deren Zeitableitung *Ḟ_{An,soll}* zur Steuerung des Aktors Aₙ (101), wobei die Führungsgröße F_{An,soll} eine Soll-Kraft oder ein Soll-Moment angibt,
- je Aktor Aₙ (101) durch einen Kraft-/Momenten-Regler REGₙ (106) Regeln (203) des Aktors Aₙ (101) basierend auf der zugeordneten Führungsgröße und/oder *Ḟ_{An,soll}* und einer/eines vom Aktor Aₙ (101) erzeugten Kraft/Moments F_{An} als Regelgröße, die von einer Sensorvorrichtung S1ₙ ermittelt wird, der jeweils am oder im Aktor Aₙ (101) oder im Triebstrang des jeweiligen Aktors Aₙ (101) vorhanden ist, und
- je Aktor Aₙ (101) durch eine Sensorvorrichtung S2ₙ Ermitteln einer aktuellen Position POS_{An} des Aktors Aₙ (101) oder einer aktuellen Position der dem Aktor Aₙ (101) zugeordneten Steuerfläche (102) und Zuführen an den Kraft-/Momenten-Regler REGₙ (106),
wobei
- die Kraft-/Momenten-Regler REGₙ (106) die Aktoren Aₙ (101) derart regeln, dass die Positionen POS_{An} auf ein durch vorgegebene Intervallgrenzen Min(POS_{An}), Max(POS_{An}) definiertes Intervall I1_{An} := [Min(POS_{An}), Max(POS_{An})] begrenzt werden, mit: Min(POS_{An}) ≤ POS_{An} ≤ Max(POS_{An}), wobei die vorgegebenen Intervalle I1_{An} jeweils in einem Intervall l2_{An} [Min_{mech}(POS_{An}), Max_{mech}(POS_{An})] liegen, dessen Intervallendwerte: Min_{mech}(POS_{An}), Max_{mech}(POS_{An}) jeweils Positionen angeben, an denen eine Bewegung des jeweiligen Aktuators Aₙ (101) oder der jeweils zugeordneten Steuerfläche (102) mechanisch begrenzt ist, **dadurch gekennzeichnet, dass**
- über dem Intervall I1_{An} eine Funktion F(Pos_{An}) definiert ist, deren Betrag |F(Pos_{An})| nur im Bereich der Intervallgrenzen Min(POS_{An}), Max(POS_{An}) nicht vernachlässigbar ist, wobei die Funktion F(POS_{An}) derart gewählt ist, dass gilt: |F(Min(POS_{An}))| = |F_{An,soll}| und |F(Max(POS_{An}))| = |F_{An,soll}|, und dass dem Kraft-/Momenten-Regler REGₙ (106) eine Regelgröße F^{*}_{An} rückgekoppelt wird für die gilt: F*_{An} = F_{An} - F(POS_{An}).

8. Computersystem mit einer Datenverarbeitungsvorrichtung, wobei die Datenverarbeitungsvorrichtung derart ausgestaltet ist, dass ein Verfahren nach Anspruch 7 auf der Datenverarbeitungsvorrichtung ausgeführt wird.

9. Computer-Programm-Produkt mit auf einem maschinenlesbaren Träger gespeicherten Programmcode zur Durchführung des Verfahrens nach Anspruch 7, wenn der Programmcode auf einer Datenverarbeitungsvorrichtung ausgeführt wird.

## Claims

1. Device for the control and regulation of n actuators Aₙ (101), n = 1, 2, ..., N, where N ≥ 1, which actuators drive aerodynamic control surfaces (102) of an aircraft, comprising:
- a first interface (104), at which instructions SV_{Pilot} for the control of the actuators Aₙ (101) are generated, and are provided by the manual input of a pilot into an input means (110), and/or a second interface (103) at which instructions SV_{AutoPilot} for the control of the actuators Aₙ (101) are generated, and are provided by an automatic flight control system of the aircraft,
- a unit (105), which, on the basis of the instructions SV_{Pilot} and/or SV_{AutoPilot}, determines for each actuator Aₙ (101) a command variable F_{An,soll} and/or F_{An,soll} for the control of the actuator Aₙ (101), wherein the command variable F_{An,soll} specifies a setpoint force or a setpoint moment,
- for each actuator Aₙ (101), a force/moment regulator REGₙ (106) for the control of the actuator Aₙ (101) based on the associated command variable and/or *Ḟ_{An,soll}* and a force/moment F_{An} generated by the actuator Aₙ (101) as a regulating variable, which is determined by a sensor device S1ₙ, which is in each case present on or in the actuator Aₙ (101), or in the drive train of the respective actuator Aₙ (101), and
- for each actuator Aₙ (101), a sensor device S2ₙ, which determines a current position POS_{An} of the actuator Aₙ (101), or a current position of the control surface (102) associated with the actuator Aₙ (101), and supplies it to the force/moment regulator REGₙ (106), wherein
- the force/moment regulators REGₙ (106) control the actuators Aₙ (101) in such a way that the positions POS_{An} are limited to an interval I1_{Au} := [Min(POS_{An}), Max(POS_{An})] defined by prescribed interval limits Min(POS_{An}), Max(POS_{An})], where: Min (POS_{An}) ≤ POS_{An} ≤ Max(POS_{An}), wherein the prescribed intervals I1_{Au} each lie in an interval I2_{An} [Min_{mech}(POS_{An}), Max_{mech}(POS_{An})] whose interval limit values: Min_{mech}(POS)_{An}, Max_{mech}(POS_{An}) respectively indicate positions at which a movement of the respective actuator Aₙ (101), or of the respectively associated control surface (102), is mechanically limited,
**characterised in that**
- a function F(POS_{An}) is defined over the interval I1_{An}, whose magnitude |F(Pos_{An})| is non-negligible only in the region of the interval limits Min (POS)_{An}, Max(POS_{An}), wherein the function F(POS_{An}) is chosen such that the following applies: |F(Min(POS_{An}))| = |F_{An,soll}| and |F(Max(POS_{An}))| = |F_{An,soll}|, and **in that** a regulating variable F^{*}_{An} is fed back to the force/moment regulator REGₙ (106), for which variable the following applies: F^{*}_{An} = F_{An}-F(POS_{An}).

2. Device according to Claim 1,
in which the force/moment regulators REGₙ (106) in each case have a processor PRₙ, which operates at a processor clock rate PTₙ, and the unit (105) has a processor PR_{E}, which operates at a processor clock rate PT_{E}, wherein the following applies: PT_{N} > PT_{E}, in particular PT_{N} > 2·PT_{E}.

3. Device according to Claim 1 or 2,
in which a regulating variable F**_{An} is fed back to the force/moment regulator REGₙ (106), where for F**_{An} the following applies: F**_{An} = F*_{An} + F_{G}, wherein F_{G} is a constant trim force for purposes of gravitational compensation for gravitational forces acting on the respective control surface (102), and/or on the drive train of the respective actuator Aₙ (101), or wherein F_{G} is an auto-trim function, which is dependent on POS_{An} and/or the time t.

4. Device according to Claim 3,
in which a regulating variable F***_{An} is fed back to the force/moment regulator REGₙ(106), where the following applies: F***_{An} = F^{*}_{An} + F_{D}, or F***_{An} = F^{*}_{An} + F_{G} + F_{D}, wherein for F_{D} the following applies: F_{D} = d(POS_{An})/dt*D, wherein D specifies a virtual damping.

5. Device according to Claim 4,
in which a regulating variable F****_{An} is fed back to the force/moment regulator REGₙ (106), for which regulating variable the following applies: F****_{An} = F^{*}_{An} + F_{S}, or F****_{An} = F^{*}_{An} +F_{G} + F_{S}, or F****_{An} = F^{*}_{An} + F_{D} + F_{S}, or F****_{AN} = F*_{AN} + F_{D} + F_{G} + F_{S}, wherein for F_{S} the following applies: F_{S} (POS_{An} - POS_{ref})·S, wherein S specifies a virtual stiffness, and POS_{ref} specifies a neutral position of the respective control surface (102), wherein the neutral position POS_{ref} is defined by the fact that no moment inducing an aircraft movement is generated by the control surface (102) concerned.

6. Aircraft with a device according to one of the Claims 1 to 5.

7. Method for the control and regulation of n actuators Aₙ (101), n = 1, 2, ..., N, with N ≥ 1, which actuators drive aerodynamic control surfaces (102) of an aircraft, with the following steps:
- the provision (201) of an instruction SV_{Pilot}, generated by a manual input of a pilot, into an input means (110) for the control of the actuators Aₙ (101) and/or the provision of an instruction SV_{AutoPilot}, generated by an automatic flight control system (109) of the aircraft, for the control of the actuators Aₙ (101),
- on the basis of the instructions SV_{Pilot} and/or SV_{AutoPilot} for each actuator Aₙ (101), the determination (202) of a command variable F_{An,soll} and/or its time derivative *Ḟ*_{*An*,*soll*} for the control of the actuator Aₙ (101), wherein the command variable F_{An,soll} specifies a setpoint force or a setpoint moment,
- for each actuator Aₙ (101), by means of a force/moment regulator REGₙ (106), the control (203) of the actuator Aₙ (101) on the basis of the associated command variable F_{An,soll} and/or *Ḟ_{An,soll,}* and a force/moment F_{An} generated by the actuator Aₙ (101) as a regulating variable, which is determined by a sensor device S1ₙ, which is present in each case on or in the actuator Aₙ (101), or in the drive train of the respective actuator Aₙ (101), and
- for each actuator Aₙ (101), by means of a sensor device S2ₙ, the determination of a current position POS_{An} of the actuator Aₙ (101), or a current position of the control surface (102) associated with the actuator Aₙ (101), and its supply to the force/moment regulator REGₙ (106), wherein
- the force/moment regulators REGₙ (106) control the actuators Aₙ (101) in such a way that the positions POS_{An} are limited to an interval I1_{An} := [Min(POS_{An}), Max(POS_{An})] defined by prescribed interval limits Min(POS)_{An}, Max(POS_{An}), where: Min (POS_{An}) ≤ POS_{An} ≤ Max(POS_{An}), wherein the prescribed intervals I1_{Au} in each case lie in an interval I2_{An} [Min_{mech}(POS_{An}), MaX_{mech}(POS_{An})], whose interval limit values: Min_{mech}(POS)_{An}, MaX_{mech}(POS_{An}) respectively specify positions at which a movement of the respective actuator Aₙ (101) or of the respectively associated control surface (102) is mechanically limited,
**characterised in that**
- a function F(Pos_{An}) is defined over the interval I1_{An}, whose magnitude |IF(Pos_{An})| is non-negligible only in the region of the interval limits Min(POS_{An}), Max(POS_{An}), wherein the function F(POS_{An}) is chosen such that |F(Min(POS_{An}))| = |F_{An,soll}| and |F(Max (POS_{An}))| = |F_{An,soll}|, and **in that** a regulating variable F^{*}_{An} is fed back to the force/moment regulator REGₙ (106) for which variable the following applies: F*_{An} = F_{An} - F(POS_{An}).

8. Computer system comprising a data processing device, wherein the data processing apparatus is configured such that a method according to Claim 7 is executed on the data processing device.

9. A computer program product, with program code stored on a machine-readable medium, for purposes of conducting the method according to Claim 7 when the program code is executed on a data processing device.

## Revendications

1. Dispositif pour la commande et régulation de n actionneurs Aₙ (101), n = 1, 2, ..., N, avec N ≥ 1, qui entraînent des gouvernes aérodynamiques (102) d'un aéronef, comprenant :
- une première interface (104) sur laquelle des consignes SV_{Pilot} pour commander les actionneurs Aₙ (101) sont produites et fournies par la saisie manuelle d'un pilote dans un moyen de saisie (110) et/ou une seconde interface (103) sur laquelle des consignes SV_{AutoPilot} pour commander les actionneurs Aₙ (101) sont produites et fournies par une commande de vol automatique de l'aéronef,
- une unité (105) qui, en se basant sur les consignes SV_{Pilot} et/ou SV_{AutoPilot} par actionneur Aₙ (101), détermine une grandeur de guidage F_{An,soll} et/ou *Ḟ*_{*An*,*soll*} pour commander l'actionneur Aₙ (101), dans lequel la grandeur de guidage indique une force de consigne ou un couple de consigne,
- par actionneur Aₙ (101), un régulateur de force/couple REGₙ (106) pour réguler l'actionneur Aₙ (101) en se basant sur la grandeur de guidage et/ou *Ḟ*_{*An*,*soll*} associée et une force/un couple F_{An} produit(e) par l'actionneur Aₙ (101) en tant que grandeur réglée qui est déterminée par un dispositif de capteur S1ₙ, qui est présent respectivement sur ou dans l'actionneur Aₙ (101) ou dans la barre d'entraînement de l'actionneur Aₙ (101) respectif, et
- par actionneur Aₙ (101), un dispositif de capteur S2ₙ qui détermine une position actuelle POS_{An} de l'actionneur Aₙ (101) ou une position actuelle de la gouverne (102) associée à l'actionneur Aₙ (101) et dirige vers le régulateur de force/couple REGₙ (106), dans lequel
- les régulateurs de force/couple REGₙ (106) régulent les actionneurs Aₙ (101) de telle façon que les positions POS_{An} soient limitées à un intervalle I1_{Au} := [Min(POS_{An}), Max(POS_{An})] défini par des limites d'intervalle prédéfinies Min(POS_{An}), Max(POS_{An}), avec : Min(POS_{An}) ≤ POS_{An} ≤ Max(POS)_{An}, dans lequel les intervalles I1_{Au} prédéfinis sont respectivement situés dans un intervalle I2_{An} [Min_{mech}(POS_{An}), Max_{mech}(POS_{An})], dont les valeurs finales d'intervalle : Min_{mech}(POS_{An}), Max_{mech}(POS_{An}) indiquent respectivement des positions sur lesquelles un mouvement de l'actionneur Aₙ (101) respectif ou de la gouverne (102) associée respective est limité mécaniquement,
**caractérisé en ce que**
- sur l'intervalle I1_{An}, une fonction F(POS_{An}) est définie, dont la valeur absolue |F(POS_{An})| est non négligeable uniquement dans la plage des limites d'intervalle Min(POS_{An}), Max(POS_{An}), dans lequel la fonction F(POS_{An}) est ainsi sélectionnée que vaut : |F(Min(POS_{An}))| = |F_{An,soll}| et |F(Max(POSAn))| = |F_{An,soll}| et qu'une grandeur de réglage F^{*}_{An} est rétrocouplée au régulateur de force/couple REGₙ (106) pour laquelle vaut : F^{*}_{An} = F_{An} - F(POS_{An}).

2. Dispositif selon la revendication 1,
dans lequel les régulateurs de force/couple REGₙ (106) présentent respectivement un processeur PRₙ, qui fonctionne à une vitesse de cadence de processeur PTₙ et l'unité (105) présente un processeur PR_{E} qui fonctionne à une vitesse de cadence de processeur PT_{E}, dans lequel vaut : PTₙ > PT_{E}, en particulier PTₙ > 2·PT_{E}.

3. Dispositif selon la revendication 1 ou 2,
dans lequel une grandeur de réglage F**_{AN} est rétrocouplée au régulateur de force/couple REGₙ (106), pour laquelle pour F**_{An} vaut : F**_{An} = F^{*}_{An} + F_{G}, dans lequel F_{G} est une force d'assiette constante pour la compensation de gravitation pour des forces de gravitation arrivant sur la gouverne (102) respective et/ou la barre d'entraînement de l'actionneur Aₙ (101), respectif ou dans lequel F_{G} est une fonction d'auto-assiette qui est fonction de la POS_{An} et/ou du temps t.

4. Dispositif selon la revendication 3,
dans lequel une grandeur de réglage F***_{An} est rétrocouplée au régulateur de force/couple REGₙ (106), pour laquelle vaut : F***_{An} = F^{*}_{An} + F_{D} ou F***_{An} = F^{*}_{An} + F_{G} + F_{D}, dans lequel pour F_{D} vaut : F_{D} = d(POS_{An})/dt·D, dans lequel D indique une atténuation virtuelle.

5. Dispositif selon la revendication 4,
dans lequel une grandeur de réglage F****_{An} est rétrocouplée au régulateur de force/couple REGₙ (106), pour laquelle vaut : F****_{An} = F^{*}_{An} + F_{S} ou F****_{An} = F^{*}_{An} + F_{G} + F_{S}, ou F****_{An} = F^{*}_{An} + F_{D} + F_{S} ou F****_{An} = F^{*}_{An} + F_{D} + F_{G} + F_{S}, dans lequel pour F_{S} vaut : F_{S} = (POS_{An}-POS_{ref})·S, dans lequel S indique une rigidité virtuelle et POS_{ref} une position neutre de la gouverne (102) respective, dans lequel la position neutre POS_{ref} est définie en ce qu'aucun couple induisant un mouvement de l'aéronef n'est produit par la gouverne (102) concernée.

6. Aéronef comprenant un dispositif selon l'une des revendications 1 à 5.

7. Procédé pour la commande et régulation de n actionneurs Aₙ (101), n = 1, 2, ..., N, avec N ≥ 1, qui entraînent des gouvernes aérodynamiques (102) d'un aéronef, comprenant les étapes suivantes :
- fourniture (201) d'une consigne SV_{Pilot} produite par la saisie manuelle d'un pilote dans un moyen de saisie (110), pour commander les actionneurs Aₙ (101) et/ou fournir une consigne SV_{AutoPilot} produite par une commande de vol automatique (109) pour commander les actionneurs Aₙ (101),
- détermination (202), en se basant sur les consignes SV_{Pilot} et/ou SV_{AutoPilot} par actionneur Aₙ (101), d'une grandeur de guidage F_{An,soll} et/ou sa dérivée temporelle *Ḟ_{An,soll}* pour commander l'actionneur Aₙ (101), dans lequel la grandeur de guidage F_{An,soll} indique une force de consigne ou un couple de consigne,
- par actionneur Aₙ (101), régulation (203) de l'actionneur Aₙ (101) par un régulateur de force/couple REGₙ (106) en se basant sur la grandeur de guidage F_{An,soll} et/ou *Ḟ_{An,soll}* associée et une force/un couple F_{An} produit(e) par l'actionneur Aₙ (101) en tant que grandeur réglée qui est déterminée par un dispositif de capteur S1ₙ, qui est présent respectivement sur ou dans l'actionneur Aₙ (101) ou dans la barre d'entraînement de l'actionneur Aₙ (101) respectif, et
- par actionneur Aₙ (101), détermination par un dispositif de capteur S2ₙ d'une position actuelle POS_{An} de l'actionneur Aₙ (101) ou une position actuelle de la gouverne (102) associée à l'actionneur Aₙ (101) et guidage vers le régulateur de force/couple REGₙ (106), dans lequel
- les régulateurs de force/couple REGₙ (106) régulent les actionneurs Aₙ (101) de telle façon que les positions POS_{An} soient limitées à un intervalle I1_{An} := [Min(POS_{An}), Max(POS_{An})] défini par des limites d'intervalle prédéfinies Min (POS_{An}), Max(POS_{An}), avec : Min(POS_{An}) ≤ POS_{An} ≤ Max(POS)_{An}, dans lequel les intervalles I1_{An} prédéfinis sont respectivement situés dans un intervalle I2_{An} [Min_{mech}(POS_{An}), Max_{mech}(POS_{An})], dont les valeurs finales d'intervalle : Min_{mech}(POS_{An}), Max_{mech}(POS_{An}) indiquent respectivement des positions sur lesquelles un mouvement de l'actionneur Aₙ (101) respectif ou de la gouverne (102) associée respective est limité mécaniquement,
**caractérisé en ce que**
- sur l'intervalle I1_{An}, une fonction F(POS_{An}) est définie, dont la valeur absolue |F(POS_{An})| est non négligeable uniquement dans la plage des limites d'intervalle Min(POS_{An}), Max(POS_{An}), dans lequel la fonction F(POS_{An}) est ainsi sélectionnée que vaut : |F(Min(POS_{An}))| = |F_{An,soll}| et |F(Max(POS_{An}))| = |F_{An,soll}| et qu'une grandeur de réglage F*_{An} est rétrocouplée au régulateur de force/couple REGₙ (106) pour laquelle vaut : F*_{An} = F_{An} - F(POS_{An}).

8. Système informatique comprenant un dispositif de traitement de données, dans lequel le dispositif de traitement de données est ainsi conçu qu'un procédé selon la revendication 7 est exécuté sur le dispositif de traitement de données.

9. Produit de programme informatique comprenant un code de programme enregistré sur un support lisible sur machine pour exécuter le procédé selon la revendication 7, lorsque le code de programme est exécuté sur un dispositif de traitement de données.
